# EUROPÄISCHE PATENTSCHRIFT

(11) **EP 2 505 993 B1**
(45) Veröffentlichungstag und Bekanntmachung des Hinweises auf die Patenterteilung: **18.11.2020**
(21) Anmeldenummer: 12160669.3
(22) Anmeldetag: 22.03.2012
(51) Int. Cl.: G01N 21/84, A24C 5/47, A24C 5/34

(54) **Verfahren zur Ermittlung der Menge eines auf ein Hüllmaterial aufgetragenen fließfähigen Auftrags**
Method for determining the volume of a flowable application applied to a covering material
Procédé de détermination de la quantité d'un enduit coulant appliqué sur un matériau d'enveloppement

(30) Priorität: 01.04.2011 DE 102011015861; 04.04.2011 DE 102011015882
(43) Veröffentlichungstag der Anmeldung: 03.10.2012
(73) Patentinhaber: Hauni Maschinenbau GmbH, 21033 Hamburg (DE)
(72) Erfinder: Sacher, Dirk, 21465 Wentorf (DE); Kalus, Peter, 21039 Escheburg (DE); Hebels, Albert-Berend, 21037 Hamburg (DE)
(74) Vertreter: Müller Verweyen

(56) Entgegenhaltungen:
- EP-A1- 1 479 304
- DE-A1- 3 909 990
- US-A- 6 021 782
- US-A1- 2005 252 516

## Beschreibung

Die Erfindung betrifft ein Verfahren zur Ermittlung der Menge eines auf ein bahnförmig zugeführtes Hüllmaterial aufgetragenen fließfähigen Auftrags in einer Artikel getaktet verarbeitenden Maschine der Tabak verarbeitenden Industrie mittels mindestens eines Sensors.

Anstelle von vollflächigen Leimaufträgen werden zunehmend sich periodisch verändernde oder profilierte Leimbilder verwendet, welche in der Länge an die zu beleimenden Formatlängen der Produkte angepasst sind. Dabei kann es sich insbesondere um prozessbedingte Leimverstärkungen, Leimverarmungen und/oder Leimunterbrechungen handeln. Prozessbedingte Leimverarmungen auf Hüllmaterialien können Fehlermeldungen verursachen und führen zum Produktauswurf, wenn das Meßsignal unter einer voreingestellten Schwelle liegt. Prozessbedingte Leimverstärkungen können bisher nicht taktbezogen überwacht werden. Prozessbedingte Leimunterbrechungen mit geringen Abmessungen können unter Umständen ausgeblendet werden, längere Unterbrechungen führen jedoch ebenfalls zu Fehlermeldung oder Produktauswurf.

WO 2005 082179 A1 offenbart eine Vorrichtung zur Ermittlung und/oder Überwachung einer auf einen Belagpapierstreifen aufgetragenen Leimmenge mit einem quer zur Transportrichtung angeordneten Ultraschallmeßsystem, das aus zwei gegenüberliegenden Reihen von Ultraschallquellen und Ultraschallempfängern gebildet ist. Wegen der erheblichen Streuung der Ultraschallquellen kann es durch den Einfluss benachbarter Ultraschallsender zu unerwünschten Störungen bzw. Überlagerungen kommen. Um dieser Problematik entgegenzuwirken und eine höhere Trennschärfe zwischen den einzelnen Messkanälen zu erhalten, ist es aus der EP 1 750 124 A1 bekannt, Trennwände jeweils zwischen den Ultraschallquellen und zwischen den Ultraschallempfängern anzuordnen. Jedoch ist unter anderem die mit Ultraschall erzielbare Messgenauigkeit und Auflösung begrenzt.

EP 0 418 342 B1 offenbart eine Einrichtung zur Erfassung ausreichender Beleimung eines doppeltbreiten Papierstreifens mit vier über die Breite des Papierstreifens quer zur Laufrichtung angeordneten kapazitiven Sensoren. Kapazitive Messverfahren haben jedoch den Nachteil, dass das Meßsignal von der Feuchte des fließfähigen Auftrags abhängt, so dass insbesondere bei Aufträgen mit variabler Feuchte die Auftragsmenge nicht einfach bestimmbar ist.

EP 1 479 304 A1 offenbart ein Verfahren zur Überwachung der Auftragsstärke von Leim auf einem Belagpapierstreifen für stabförmige Artikel der Tabak verarbeitenden Industrie nach dem Oberbegriff von Anspruch 1.

DE 39 09 990 A1 offenbart eine Einrichtung zur Erfassung ausreichender Beleimung eines zu verklebenden Papierstreifens in einer Zigarettenmaschine.

US 6,021,782 offenbart ein Verfahren zum Detektieren von Bereichen ungenügender Beleimung auf dem Belagpapier in einer Filteransetzmaschine für die Zigarettenherstellung.

Die Aufgabe der Erfindung besteht darin, ein Verfahren und eine Vorrichtung in Produktionsmaschinen der Tabak und Filter verarbeitenden Industrie bereit zu stellen, bei der die zuvor geschilderten Nachteile und Probleme insbesondere im Zusammenhang mit periodisch veränderlichen Leimaufträgen vermieden werden können und vorzugsweise eine Lageerfassung relativ zum Maschinentakt für prozessbedingte Materialverarbeitungen bereitgestellt wird.

Die Erfindung löst diese Aufgabe mit den Merkmalen der unabhängigen Ansprüche 1 und 9. Die auf den Maschinentakt bezogene Ermittlung der Auftragsmenge ermöglicht es, ein individuelles Auftragsmengenprofil für jeden einzelnen Artikel zu erstellen. Die Erfindung sieht dabei erstmals die Ermittlung eines Profils der Auftragsmenge in der Längsrichtung, d.h. in der Förderrichtung des Hüllmaterials, vor und stellt daher differenzierte Informationen bezüglich der Auftragsmenge in Längsrichtung zur Verfügung. Mit den herkömmlichen Messverfahren war dagegen nur eine Ermittlung einer in Längsrichtung gemittelten, oder an zufälligen Abtastpositionen vorhandenen, Auftragsmenge möglich. Dies erlaubte im Wesentlichen nur eine binäre Feststellung, ob die Auftragsmenge ausreichend war oder nicht. Zudem führt die herkömmliche Ermittlung der Auftragsmenge bei in Längsrichtung variierenden Auftragsbildern zwangsläufig zu Ungenauigkeiten und Fehlbeurteilungen.

Im Folgenden wird die Erfindung anhand einer bevorzugten Anwendung von Leimauftrag auf ein Hüllmaterial der Tabak verarbeitenden Industrie, insbesondere Belagpapier zum Anbinden des Filters an den Tabakstock, Filterhüllpapier oder Hüllpapier für den Tabakstock, erläutert. Andere denkbare Anwendungen betreffen beispielsweise Farbaufträge auf ein beliebiges Hüllmaterial, oder Aufträge auf Hüllfolien in Verpackungsmaschinen der Tabak verarbeitenden Industrie. Auf diese Anwendungen lassen sich die folgenden Ausführungen sinngemäß übertragen. Das Hüllmaterial ist nicht auf Papier beschränkt.

Die erfindungsgemäße Ermittlung von Längsprofilen der Auftragsmenge ist besonders nützlich zur Beurteilung in Längsrichtung variierender Aufträge, insbesondere prozessbedingt sich periodisch verändernder Auftragsbilder wie periodisch auftretender Leimverarmungen, Leimverstärkungen und/oder Leimunterbrechungen. Für jede dieser Bereiche mit unterschiedlichen Sollaufträgen können individuell angepasste Schwellen festgelegt und geprüft werden. Fehlbeurteilungen, beispielsweise Produktauswürfe, wenn die gemessene Auftragsmenge aufgrund von Leimverarmungszonen eine zu hoch angesetzte Schwelle unterschreitet, können vermieden werden. Andererseits können die Schwellen empfindlich eingestellt werden und müssen nicht, wie beispielsweise im Falle von periodischen Leimverarmungszonen, sehr niedrig eingestellt werden, um Fehlbeurteilungen sicher zu vermeiden. Prozessbedingte Leimverarmungen, Leimverstärkungen und Leimunterbrechungen können taktbezogen ermittelt, bewertet und überwacht werden.

Erfindungsgemäß können weiterhin Informationen über die Phasenlage eines einzelnen Artikels relativ zu dem Maschinentakt bereitgestellt werden. Erfindungsgemäß geschieht dies dadurch, dass mindestens eine Flanke in dem ermittelten Längsprofil und aus der Flanke die Phasenlage des betreffenden Streifens relativ zu dem Maschinentakt bestimmt wird. Unterbrechungen in einer oder mehreren Leimspuren können somit vorzugsweise lagegenau in ein vorgegebenes Muster eingeregelt werden, um eine gewünschte Produktstabilität und Markengleichheit zu erzeugen.

Vorzugsweise wird das ermittelte Längsprofil der Auftragsmenge mit in der Maschine gespeicherten Sollprofildaten verglichen. Dabei kann es sich beispielsweise um ein Sollprofil handeln, bzw. um einen Toleranzbereich zwischen einem maximal und einem minimal tolerierbaren Profil. Der Vergleich kann vorzugsweise so durchgeführt werden, dass an mindestens einer Stelle des Profils geprüft wird, ob der entsprechende Messwert oberhalb bzw. unterhalb einer vordefinierten Schwelle liegt. Anhand des Vergleichs kann eine zuverlässige Bewertung der Auftragsmenge durchgeführt werden.

Besonders vorteilhaft ist es, wenn das ermittelte Profil auf einer Anzeigevorrichtung der Maschine grafisch dargestellt wird. Dies stellt dem Bediener im Betrieb der Maschine differenzierte Informationen bezüglich der Auftragsmenge und des Auftragsprofils zur Verfügung und gestattet es ihm einzugreifen, wenn beispielsweise das ermittelte Profil nicht mehr innerhalb des vorbestimmten Toleranzbereichs liegt.

Die Erfindung verspricht ein großes Potential beispielsweise für die Qualitätsüberwachung bzw. Sicherung des jeweiligen Produktes, Materialeinsparung über Leimmengenregelung und Absicherung gegen das Abfallen von Filtern. Insbesondere bei Düsenbeleimung kann eine Leimmengenregelung erfolgen, bei einer Mehrzahl von Düsen beispielsweise auch unabhängig voneinander. Leimfreie Zonen können auf Leimverwischungen geprüft werden. Bei Leimwalzensystemen kann eine Verschleißerkennung stattfinden. Die Leimbildlage kann relativ zum Produktschnitt bzw. Takt erfasst und gegebenenfalls geregelt werden.

Die Erfindung wird im Folgenden anhand bevorzugter Ausführungsformen unter Bezugnahme auf die beigefügten Figuren erläutert. Dabei zeigt:
- Fig. 1: eine schematische Ansicht einer Messvorrichtung zur Ermittlung der Leimauftragsmenge auf eine Papierbahn;
- Fig. 2: eine Ansicht von oben auf eine doppeltbreite beleimte Hüllmaterialbahn;
- Fig. 3: ein Längsprofil der Leimauftragsmenge im Bereich von periodischen leimfreien Zonen; und
- Fig. 4: ein Längsprofil der Leimauftragsmenge in einem Randbereich der Hüllmaterialbahn.

Die nachfolgende Beschreibung wird anhand der Beleimung von Belagpapier 23 in einer doppelsträngigen Filteransetzmaschine 10 erläutert. Wie bereits zuvor dargelegt wurde, ist die Erfindung nicht auf diese Anwendung beschränkt. Eine weitere bevorzugte Anwendung ist beispielsweise die Beleimung von Filterpapier in einer nicht gezeigten Maschine zur Herstellung von Filterstäben, da auch hier in Längsrichtung periodisch variierende Leimauftragsmengen auftreten können.

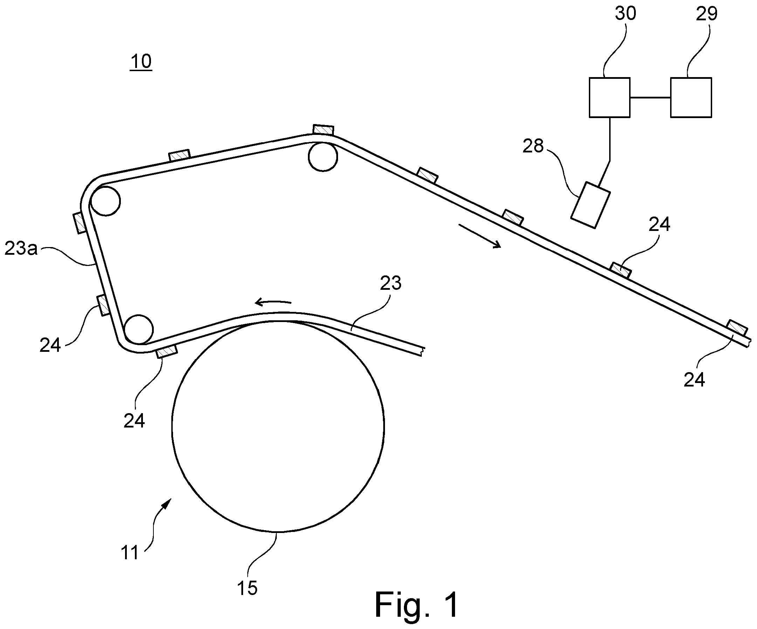

Der in Fig. 1 gezeigte Ausschnitt einer Filteransetzmaschine 10 zeigt eine Leimauftrageinrichtung 11 mit einer rotierbar gelagerten Leimwalze 15, die mittels nicht gezeigter Einrichtungen mit Leim versorgt wird. Der von der Leimwalze 15 aufgenommene Leim wird an eine am Außenumfang der Leimwalze 15 anliegende, von einer nicht gezeigten Bobine endlos in Pfeilrichtung zugeförderte Belagpapierbahn 23 abgegeben. Der Leimauftrag 24 auf dem beleimten Belagpapier 23 ist in Fig. 1 nur schematisch gezeigt. Über der beleimten Seite des Belagpapiers 23a ist eine Messvorrichtung 28 zur Ermittlung der aufgetragenen Leimmenge angeordnet, die im Folgenden noch näher erläutert wird. Die Leimmenge kann beispielsweise in Form der Leimmasse, der Schichtdicke des Leims oder eines anderen damit eindeutig zusammenhängenden geeigneten Parameters ermittelt werden.

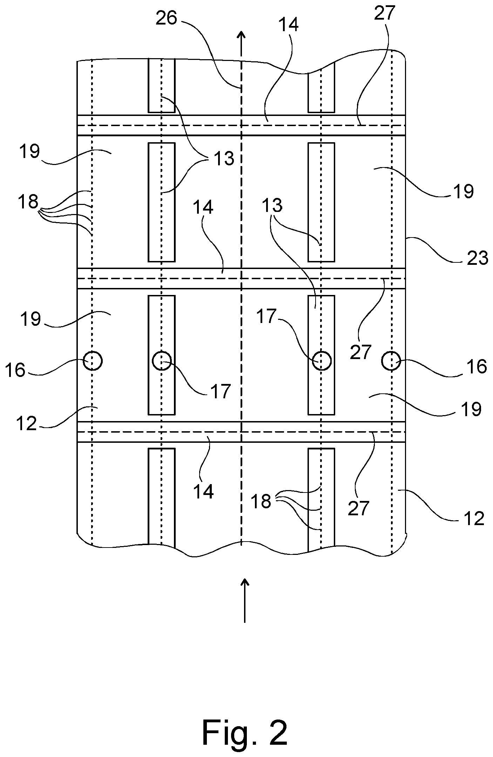

Das im Falle einer Doppelstrangmaschine doppeltbreite Belagpapier 23 weist in Längsrichtung bzw. Förderrichtung eine zentrale Schnittlinie 26 auf, wobei das Leimbild relativ zu der Schnittlinie 26 symmetrisch ist. Entlang der ebenfalls gestrichelt dargestellten Schnittlinien 27 quer zur Transportrichtung wird das Belagpapier 23 nach der Beleimung in doppeltbreite Papierstreifen geschnitten. Jedes gestrichelte Kästchen in Figur 2 entspricht daher genau einem zu umhüllenden Artikel, hier einer Zigarette. Der einem Kästchen entsprechende Teil der Hüllmaterialbahn 23 wird im Folgenden als Artikelstreifen 19 bezeichnet. In Figur 2 sind vier Artikelstreifen 19 vollständig und vier Artikelstreifen 19 im Ausschnitt gezeigt.

Wie aus Figur 2 ersichtlich ist, können in einem mittleren Bereich jeder Halbbahn sich in Förderrichtung erstreckende, streifenförmige Leimverarmungen 13 oder leimfreie Zonen vorgesehen sein, damit beispielsweise in diesem Bereich angeordnete Ventilationsöffnungen nicht mit Leim verklebt werden, und/oder um in diesem für die Befestigung weniger kritischen Bereich Leim zu sparen. Des Weiteren können um die Schnittlinien 27 herum quer zur Förderrichtung angeordnete, sich über die Breite der Belagpapierbahn 23 erstreckende streifenförmige Leimverarmungen 14 vorgesehen sein, um einer Verschmutzung der Schneideinrichtung zum Schneiden der Belagpapierbahn 23 entlang der Schnittlinien 27 entgegenzuwirken. In den übrigen Bereichen kann eine im Wesentlichen homogene Beleimung mittlerer Stärke vorliegen, um eine zuverlässige Verklebung des Belagpapiers mit dem Artikel zu erreichen. Wie aus Figur 2 ersichtlich ist, ergeben sich somit in diesem Fall zwei Bereiche, in denen der Leimauftrag in Längsrichtung periodisch variiert, nämlich im Bereich der leimfreien Zonen bzw. Leimverarmungen 13, und der übrige Bereich des Belagpapiers aufgrund der Leimverarmungen 14. Selbstverständlich können mehr als zwei solcher Bereiche, und dementsprechend mehr als zwei entsprechende Sensorpaare 16, 17 vorgesehen sein. Beispielsweise können an den Rändern 12 des Belagpapiers 23 nicht gezeigte Leimverstärkungen zur Verstärkung der Verbindung des Filters mit dem Tabakstock vorgesehen sein.

Die Messvorrichtung 28 umfasst im Allgemeinen mindestens einen Leimsensor, im Falle einer Mehrstrangmaschine mindestens eine der Zahl der Stränge entsprechende Zahl von Leimsensoren. Im Ausführungsbeispiel der Figur 2 sind vier Leimsensoren 16, 17 vorgesehen, nämlich zwei über den leimfreien Zonen 13 angeordnete Sensoren 17 und zwei außerhalb der leimfreien Zonen 13 angeordnete Sensoren 16. Die Sensoren 16 sind vorteilhaft in den beiden äußeren Randbereichen 12 des Belagpapiers 23 angeordnet, da hier eine ausreichende Beleimung wichtig ist, um eine sichere Verbindung des Filters mit dem Tabakstock zu erreichen und ein unerwünschtes Abfallen des Filters vom Tabakstock sicher zu verhindern. Im Allgemeinen sind die Sensoren vorzugsweise über, bzw. unter, Bereichen der Hüllmaterialbahn angeordnet, deren Beleimung in der Förderrichtung periodisch variiert. Die Sensoren 16, 17 können vorzugsweise in einer Reihe über die Breite des Belagpapiers 23 erstreckend angeordnet sein.

Die Messvorrichtung 28 wird mittels eines elektronischen Steuerungsmittels 30, das beispielsweise in der speicherprogrammierbaren Maschinensteuerung realisiert sein kann, gesteuert, um Messdaten aufzunehmen und das von der Messvorrichtung 28 erzeugte Meßsignal auszulesen und zu verarbeiten. Das Steuerungsmittel 30 ist eingerichtet, um pro Sensor 16, 17 eine Mehrzahl von Messpunkten 18 für jeden Artikelstreifen 19 aufzunehmen. Im Beispiel der Figur 2 sind dies etwa 10 Messpunkte pro Artikelstreifen 19 und Sensor 16, 17. Im Allgemeinen werden in der Förderrichtung vorzugsweise mindestens zwei, vorzugsweise mindestens fünf, weiter vorzugsweise mindestens 10, noch weiter vorzugsweise mindestens 20 Messpunkte pro Artikelstreifen 19 und Sensor 16, 17 aufgenommen. In einer praktischen Ausführungsform liegt die in der Förderrichtung aufgenommene Zahl von Messpunkten pro Artikelstreifen 19 und Sensor 16, 17 beispielsweise im Bereich von mindestens 30. Mit anderen Worten ist der zeitliche Abstand zwischen zwei in der Förderrichtung aufeinander folgenden Schnittlinien 27 mindestens doppelt so groß wie der zeitliche Abstand zwischen zwei Messpunkten 18. Um dies zu realisieren, steuert das Steuerungsmittel 30 die Sensoren 16, 17 mit einer Auslesefrequenz an, die mindestes doppelt so groß, vorzugsweise mindestens fünfmal, weiter vorzugsweise mindestens zehnmal und noch weiter vorzugsweise mindestens zwanzigmal so groß ist wie der auf die Artikelstreifen 19 bezogene Maschinentakt. Die Messwerte 18 werden vorzugsweise mit einer vorbestimmten Messtaktung ausgelesen, so dass sie konstante zeitliche Abstände voneinander aufweisen.

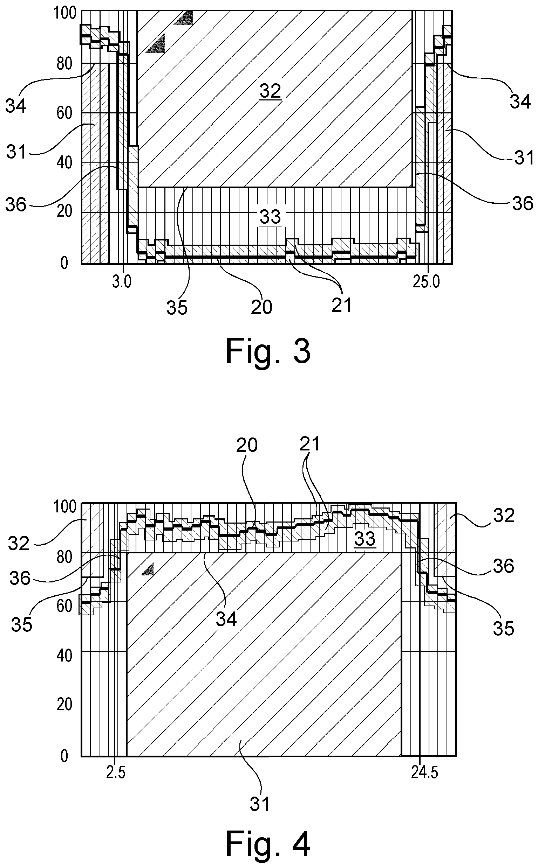

Aufgrund der Mehrzahl von Messpunkten 18 pro Artikelstreifen 19 in der Förderrichtung kann ein Längsprofil der gemessenen Leimauftragsmenge, d.h. ein Profil entlang der Förderrichtung, erstellt werden. Zwei entsprechende Leimmengendiagramme sind in den Figuren 3 und 4 gezeigt. In beiden Fällen werden 40 Messpunkte pro Artikelstreifen 19 aufgenommen. Die x-Achse der Profile bezeichnet die Förderrichtung, auf der y-Achse ist die Leimmenge aufgetragen. Der linke Rand der Profile entspricht einer Schnittlinie 27 in Figur 2, der rechte Rand der Profile der folgenden Schnittlinie 27 in Figur 2, so dass jedes Profil genau einem Artikelstreifen 19 des Belagpapiers 23 entspricht.

Zu jedem Sensor 16, 17 wird zweckmäßigerweise ein eigenes Leimmengendiagramm erstellt. Die Leimmengendiagramme werden vorteilhafterweise auf einer Anzeigeeinrichtung 29, insbesondere einem Bildschirm, für den Maschinenbediener angezeigt. In der Ausführungsform gemäß Figur 2 werden demnach vorzugsweise vier Leimmengendiagramme entsprechend den vier Sensoren 16, 17 auf der Anzeigeeinrichtung 29 angezeigt. Das in Figur 3 gezeigte Leimmengendiagramm kann beispielsweise von einem Sensor 17, das in Figur 4 gezeigte Leimmengendiagramm von einem Sensor 16 gemessen sein.

In den Leimmengendiagrammen gezeigt ist das aktuell gemessene Leimmengenprofil 20 als Kurve sowie Bereiche 21 oberhalb und unterhalb um das aktuelle Profil 20 herum, die eine gewisse Zahl vor dem aktuellen Profil 20 gemessener Profile darstellen, um einen Eindruck von der Schwankungsbreite der Leimmenge zu erhalten. In den Leimmengendiagrammen sind weiterhin vorbestimmte Außer-Toleranzbereiche 31, 32 eingezeichnet. Vorgesehen sind Außer-Toleranzbereiche 31, bei denen die Leimmenge eine vorgegebene Mindestmenge 34 unterschreitet, und Außer-Toleranzbereiche 32, bei denen die Leimmenge eine vorgegebene Höchstmenge 35 überschreitet. Zwischen den Außer-Toleranzbereichen 31, 32 ist somit ein Soll-Toleranzprofilbereich 33 definiert, in dem das Leimprofil 20 liegen soll. Wenn das Leimprofil 20 nicht oder nicht vollständig in dem Soll-Toleranzprofilbereich 33 liegt, können geeignete Aktionen automatisch durchgeführt werden, beispielsweise Anzeigen einer Warnung auf der Anzeigeeinrichtung 29 und/oder Auswerfen als fehlerhaft bewerteter Artikel, bis hin zum Maschinenstop. Das Leimmengenprofil 20, die Schwankungsbreite 21 des Leimmengenprofils 20, die Außer-Toleranzbereiche 31, 32 und/oder der Soll-Toleranzprofilbereich 33 sind auf der Anzeigevorrichtung 29 vorzugsweise unterschiedlich farblich kodiert. Das Leimmengenprofil 20 stellt im Vergleich zu einer herkömmlich ermittelten Leimauftragsmenge sehr differenzierte Informationen bezüglich des Leimauftrags über die Länge des Artikelstreifens 19 bereit, die in vielfältiger Hinsicht auswertbar sind.

Für jeden Sensor 16, 17 können vorteilhaft individuelle Außer-Toleranzbereiche 31, 32 bzw. Soll-Toleranzprofilbereiche 33 definiert sein. Die Außer-Toleranzbereiche 31, 32 bzw. Soll-Toleranzprofilbereiche 33 sind mithilfe von Schwellwerten 34, 35 definiert. Insbesondere sind die Außer-Toleranzbereiche 31 durch Mindestschwellen 34 und die Außer-Toleranzbereiche 32 durch Höchstschwellen 35 definiert. Die Positionierung der Schwellen in dem Leimmengendiagramm kann dabei an die jeweiligen Anforderungen individuell angepasst werden. Insbesondere sind die Schwellen 34, 35 nicht über die Länge eines Artikelstreifens 19 konstant, sondern sind zweckmäßigerweise entsprechend der in Förderrichtung variierenden Leimauftragsmenge abschnittsweise unterschiedlich eingestellt. Dies wird im Folgenden anhand der Figuren 3 und 4 genauer erläutert.

In Figur 3, die mit einem Sensor 17 aufgenommen wurde, ist die Mindestschwelle in einem zentralen Bereich auf Null und die Höchstschwelle 35 auf einen relativ niedrigen Wert gesetzt, da hier die leimfreie Zone 13 angeordnet ist. Am Anfang und am Ende des Artikelstreifens 19 ist dagegen die Höchstschwelle auf Maximum und die Mindestschwelle 34 auf einen relativ hohen Wert gesetzt, da zwischen den leimfreien Zonen 13 eine normale Beleimung sichergestellt sein soll.

In Figur 4, die mit einem Sensor 16 aufgenommen wurde, ist die Mindestschwelle 34 in einem zentralen Bereich auf einen relativ hohen Wert und die Höchstschwelle auf Maximum gesetzt, da hier eine normale Beleimung sichergestellt sein soll. Am Anfang und am Ende des Artikelstreifens 19 ist dagegen die Höchstschwelle 35 auf einen niedrigeren Wert im Verhältnis zur Mindestschwelle 34 in dem zentralen Bereich, und die Mindestschwelle beispielsweise auf Null gesetzt, da hier zwar eine gewisse Beleimung vorgesehen ist, jedoch eine überdurchschnittliche Leimmenge in den Leimverarmungszonen 14 aufgrund der dort angeordneten Schnittkanten 27 vermieden werden soll.

Das Steuerungsmittel 30 ist weiterhin erfindungsgemäß zur Ermittlung von ansteigenden und/oder abfallenden Flanken 36 des Leimmengenprofils 20 eingerichtet. Diese liegen beispielsweise in Figur 3 bei den x-Werten 3,0 und 25,0 sowie in Figur 4 bei den x-Werten 2,5 und 24,5. Aus der Position der Flanken 36 wird die Phasenlage der Hüllmaterialbahn 23 bzw. der einzelnen Artikelstreifen 19 relativ zu dem Maschinentakt mit hoher Genauigkeit bestimmt und gegebenenfalls auf der Grundlage dieser Auswertung : nachgeregelt.

Die Sensoren 16, 17 können hoch getaktet angesteuert werden und besitzen vorteilhafterweise eine ausreichend hohe Wegauflösung bzw. zeitliche Auflösung, um somit insgesamt eine hohe Messauflösung zu erreichen und die Ermittlung eines genauen Leimmengenprofils 20 entsprechend der Anzahl der aufgenommenen Messpunkte 18 zu gestatten. : Erfindungsgemäß beruht die Messung auf einem IR-Absorptionsverfahren, wobei die verwendete Wellenlänge der Sensoren auf Absorptionsbande in dem fließfähigen Auftrag, beispielsweise Wasserbande, abgestimmt sein kann. Im Fall solcher absolut messender Sensoren kann vorteilhaft die absolute Leimmenge bestimmt werden.

## Patentansprüche

1. Verfahren zur Ermittlung der Menge eines fließfähigen Auftrags auf ein bahnförmig zugeführtes Hüllmaterial (23) in einer Artikel getaktet verarbeitenden Maschine (10) der Tabak verarbeitenden Industrie mittels mindestens eines Sensors (16, 17), wobei die Auftragsmenge taktbezogen bestimmt wird und für jeden einem Artikel entsprechenden Hüllmaterial-Streifen (19) eine Mehrzahl von Messwerten (18) über die Länge des Streifens (19) in Förderrichtung aufgenommen und aus den mehreren Messwerten (18) ein Profil (20) der Auftragsmenge über die Länge des Streifens (19) erstellt wird, **dadurch gekennzeichnet, dass** mindestens eine Flanke (36) in dem Profil (20) bestimmt wird, aus deren Lage die Phasenlage des betreffenden Streifens (19) relativ zu dem Maschinentakt bestimmt und auf der Grundlage dieser Auswertung nachgeregelt wird, wobei die Messung auf einem IR-Absorptionsverfahren beruht, wobei die verwendete Wellenlänge des Infrarot-Sensors (16, 17) auf Absorptionsbande in dem fließfähigen Auftrag abgestimmt ist.

2. Verfahren nach Anspruch 1, **dadurch gekennzeichnet, dass** das ermittelte Längsprofil (20) der Auftragsmenge mit in der Maschine gespeicherten Sollprofildaten (31, 32, 33, 34, 35) verglichen wird.

3. Verfahren nach einem der vorangehenden Ansprüche, **dadurch gekennzeichnet, dass** das ermittelte Profil (20) auf einer Anzeigevorrichtung (29) der Maschine (10) grafisch dargestellt wird.

4. Verfahren nach Anspruch 3, **dadurch gekennzeichnet, dass** neben dem aktuellen Profil (20) zuvor gemessene Profile (21) dargestellt werden.

5. Verfahren nach Anspruch 3 oder 4, **dadurch gekennzeichnet, dass** ein vorbestimmter Soll-Toleranzbereich (33) für das Profil (20) dargestellt wird.

6. Verfahren nach einem der Ansprüche 3 bis 5, **dadurch gekennzeichnet, dass** mindestens ein vorbestimmter Außer-Toleranzbereich (31, 32) für das Profil (20) dargestellt wird.

7. Verfahren nach einem der vorangehenden Ansprüche, **dadurch gekennzeichnet, dass** an mindestens einer Stelle des Profils (20) geprüft wird, ob der entsprechende Messwert unterhalb einer vordefinierten Schwelle (35) liegt.

8. Verfahren nach einem der vorangehenden Ansprüche, **dadurch gekennzeichnet, dass** an mindestens einer Stelle des Profils (20) geprüft wird, ob der entsprechende Messwert oberhalb einer vordefinierten Schwelle (34) liegt.

9. Vorrichtung zur Ermittlung der Menge eines fließfähigen Auftrags auf ein bahnförmig zugeführtes Hüllmaterial (23) in einer Artikel getaktet verarbeitenden Maschine (10) der Tabak verarbeitenden Industrie, umfassend mindestens einen Sensor (16, 17) und ein mit dem Sensor (16, 17) verbundenes Steuerungsmittel (30), wobei das Steuerungsmittel (30) eingerichtet ist, die Auftragsmenge taktbezogen zu bestimmen und für jeden einem Artikel entsprechenden Hüllmaterial-Streifen (19) eine Mehrzahl von Messwerten (18) über die Länge des Streifens (19) in Förderrichtung zu ermitteln und aus den ermittelten Messwerten (18) ein Profil (20) der Auftragsmenge über die Länge des Streifens (19) zu erstellen, **dadurch gekennzeichnet, dass** das Steuerungsmittel (30) zur Ermittlung mindestens einer Flanke (36) in dem Profil (20) eingerichtet ist, aus deren Lage die Phasenlage des betreffenden Streifens (19) relativ zu dem Maschinentakt bestimmt und auf der Grundlage dieser Auswertung nachgeregelt wird, wobei die Vorrichtung zur Messung beruhend auf einem IR-Absorptionsverfahren eingerichtet ist, wobei die verwendete Wellenlänge des Infrarot-Sensors (16, 17) auf Absorptionsbande in dem fließfähigen Auftrag abgestimmt ist.

10. Vorrichtung nach Anspruch 9, **dadurch gekennzeichnet, dass** die Abtastfrequenz des Sensors (16, 17) mindestens doppelt so groß ist wie der auf die Hüllmaterialbahn (23) bezogene Maschinentakt.

## Claims

1. Method for determining the quantity of a flowable application on a web-fed wrapping material (23) in a clocked article processing machine (10) of the tobacco processing industry by means of at least one sensor (16, 17), the application quantity being determined in relation to the clock rate and, for each wrapping material strip (19) corresponding to an article, a plurality of measurement values (18) being recorded over the length of the strip (19) in the conveying direction and a profile (20) for the application quantity over the length of the strip (19) being created from the plurality of measurement values (18), **characterised in that** at least one flank (36) is determined in the profile (20), from the position of which flank the phase position of the relevant strip (19) relative to the machine clock rate is determined and readjusted on the basis of this evaluation, the measurement being based on an IR absorption method, the used wavelength of the infrared sensor (16, 17) being matched to absorption bands in the flowable application.

2. Method according to claim 1, **characterised in that** the determined longitudinal profile (20) of the application quantity is compared with target profile data (31, 32, 33, 34, 35) stored in the machine.

3. Method according to either of the preceding claims, **characterised in that** the determined profile (20) is shown graphically on a display device (29) of the machine (10).

4. Method according to claim 3, **characterised in that**, in addition to the current profile (20), previously measured profiles (21) are shown.

5. Method according to either claim 3 or claim 4, **characterised in that** a predetermined target tolerance range (33) for the profile (20) is shown.

6. Method according to any of claims 3 to 5, **characterised in that** at least one predetermined out-of-tolerance range (31, 32) for the profile (20) is shown.

7. Method according to any of the preceding claims, **characterised in that** a check is made at at least one point of the profile (20) as to whether the corresponding measurement value is below a predefined threshold (35).

8. Method according to any of the preceding claims, **characterised in that** a check is made at at least one point of the profile (20) as to whether the corresponding measurement value is above a predefined threshold (34).

9. Device for determining the quantity of a flowable application on a web-fed wrapping material (23) in a clocked article processing machine (10) of the tobacco processing industry, comprising at least one sensor (16, 17) and a control means (30) which is connected to the sensor (16, 17), the control means (30) being designed to determine the application quantity in relation to the clock rate and to determine, for each wrapping material strip (19) corresponding to an article, a plurality of measurement values (18) over the length of the strip (19) in the conveying direction and to create a profile (20) for the application quantity over the length of the strip (19) from the measurement values (18), **characterised in that** the control means (30) is designed to determine at least one flank (36) in the profile (20), from the position of which flank the phase position of the relevant strip (19) is determined relative to the machine clock rate and is readjusted on the basis of this evaluation, the device being designed to measure on the basis of an IR absorption method, the used wavelength of the infrared sensor (16, 17) being matched to the absorption band in the flowable application.

10. Device according to claim 9, **characterised in that** the scanning frequency of the sensor (16, 17) is at least twice as great as the machine clock rate which is related to the wrapping material web (23).

## Revendications

1. Procédé de détermination de la quantité d'un enduit coulant sur un matériau d'enveloppement (23) achiminé en rouleau dans une machine (10) de traitement cadencé d'articles de l'industrie de traitement du tabac, au moyen d'au moins un capteur (16, 17), dans lequel la quantité d'enduit est déterminée en fonction de la cadence et pour chaque bande (19) de matériau d'enveloppement correspondant à un article une pluralité de valeurs de mesure (18) sur la longueur de la bande (19) est relevée dans la direction d'avancement et un profil (20) de la quantité d'enduit sur la longueur de la bande (19) est établi à partir des plusieurs valeurs de mesure (18), **caractérisé en ce qu'**au moins une pente (36) est déterminée dans le profil (20), la phase de la bande (19) concernée par rapport à la cadence de la machine est déterminée à partir de la position de cette pente et est réajustée sur la base de cette évaluation, dans lequel la mesure consiste en un procédé d'absorption IR, dans lequel la longueur d'onde du capteur infrarouge (16, 17) qui est utilisée est adaptée à la bande d'absorption dans l'enduit coulant.

2. Procédé selon la revendication 1, **caractérisé en ce que** le profil de longueur (20) déterminé de la quantité d'enduit est comparé à des données de profil de consigne (31, 32, 33, 34, 35) enregistrées dans la machine.

3. Procédé selon l'une des revendications précédentes, **caractérisé en ce que** le profil déterminé (20) est représenté graphiquement sur un dispositif d'affichage (29) de la machine (10).

4. Procédé selon la revendication 3, **caractérisé en ce que**, outre le profil actuel (20), des profils précédemment mesurés (21) sont représentés.

5. Procédé selon la revendication 3 ou 4, **caractérisé en ce qu'**un intervalle de tolérance de consigne (33) prédéfini est représenté pour le profil (20).

6. Procédé selon l'une des revendications 3 à 5, **caractérisé en ce qu'**au moins un intervalle de tolérance extérieur (31, 32) prédéterminé est représenté pour le profil (20).

7. Procédé selon l'une des revendications précédentes, **caractérisé en ce qu'**il est vérifié à au moins un point du profil (20) si la valeur de mesure correspondante se trouve en dessous d'un seuil (35) prédéfini.

8. Procédé selon l'une des revendications précédentes, **caractérisé en ce qu'**il est vérifié à au moins un point du profil (20) si la valeur de mesure correspondante se trouve au-dessus d'un seuil (34) prédéfini.

9. Dispositif de détermination de la quantité d'un enduit coulant sur un matériau d'enveloppement (23) acheminé en rouleau dans une machine (10) de traitement cadencé d'articles de l'industrie de traitement du tabac, comprenant au moins un capteur (16, 17) et un moyen de commande (30) relié au capteur (16, 17), dans lequel le moyen de commande (30) est configuré pour déterminer la quantité d'enduit en fonction de la cadence et pour déterminer dans la direction d'avancement une pluralité de valeurs de mesure (18) sur la longueur de la bande (19) pour chaque bande (19) de matériau d'enveloppement correspondant à un article et pour établir un profil (20) de la quantité d'enduit sur la longueur de la bande (19) à partir des valeurs de mesure (18) déterminées, **caractérisé en ce que** le moyen de commande (30) est configuré pour déterminer au moins une pente (36) dans le profil (20), la phase de la bande (19) concernée par rapport à la cadence de la machine est déterminée à partir de la position de cette pente et est réajustée sur la base de cette évaluation, dans lequel le dispositif est configuré pour des mesures consistant en un procédé d'absorption IR, dans lequel la longueur d'onde du capteur infrarouge (16, 17) qui est utilisée est adaptée à la bande d'absorption dans l'enduit coulant.

10. Dispositif selon la revendication 9, **caractérisé en ce que** la fréquence d'échantillonnage du capteur (16, 17) est au moins le double de la cadence de la machine se rapportant au rouleau de matériau d'enveloppement (23).
